# EUROPEAN PATENT APPLICATION

(11) **EP 1 870 741 A1**
(43) Date of publication of application: **26.12.2007**
(21) Application number: 06300711.6
(22) Date of filing: 21.06.2006
(51) Int. Cl.: G02B 3/14, G02B 26/02

(54) **Variable focus liquid lens**

(71) Applicant: Varioptic, 69007 Lyon (FR)
(72) Inventor: Berge, Bruno, 69002 Lyon (FR)
(74) Representative: de Beaumont, Michel

(57) **Abstract**

The invention concerns a variable focus liquid lens (300, 400) comprising: a structure comprising first and second transparent windows (304, 308) that substantially face each other and a cavity between said transparent windows that contains first and second immiscible liquids (301, 302), and comprises a first liquid-liquid interface (330, 334) and a second liquid-liquid interface (332, 336); a disc-shaped intermediate member (314) that is arranged between the first and second windows in the cavity and that comprises a radially inner edge (315) that defines an opening through the intermediate member, wherein said first interface (330, 334) traverses the opening, and wherein the edge of the first interface is fixed to the edge of the opening; and first and second electrodes (306, 314) positioned within the cavity, wherein the second interface (332, 336) is selectively moveable by electrowetting with respect to a surface selected from the surface of the intermediate member and an inner surface of said structure, in response to application of a voltage between said first and second electrodes, whereby the curvature of the first interface is variable in response to movement of the second interface.

## Description

### FIELD OF THE INVENTION

The present invention relates to an electrowetting device, and in particular to a variable focus liquid lens in which the focus can be varied by the application of a voltage.

### BACKGROUND OF THE INVENTION

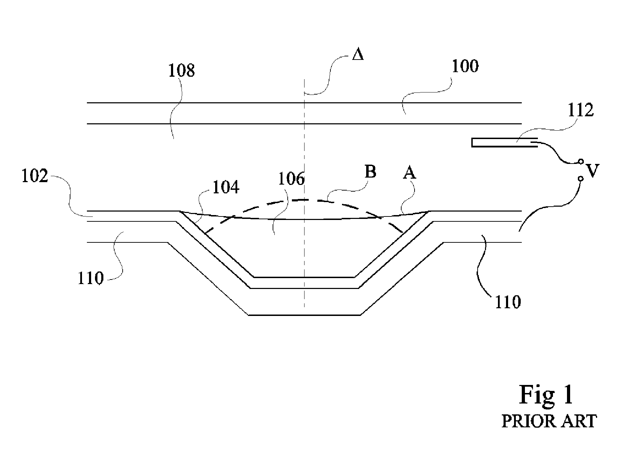

A number of embodiments of variable focus liquid lenses are described in European patent N°1166157. Figure 1 of the present application corresponds to Figure 12 of that patent and illustrates one example of a variable focus liquid lens according to the prior art. As shown in Figure 1, the variable focus liquid lens comprises a fluid chamber with two insulating transparent plates 100 and 102 and an optical axis Δ. Plate 102 comprises a conical or cylindrical recess, with a side face 104 inclined with respect to the optical axis Δ of the device, and which receives a drop of a first liquid which is an insulating liquid 106. The remainder of the chamber extending up to transparent plate 100 is filled with a second liquid 108, which is a conducting liquid. The liquids are immiscible, and have different refraction indexes but roughly the same density, forming a refractive interface or meniscus (A, B). A transparent electrode 110 is formed over the outer surface of insulating plate 102. Another electrode 112 is provided in contact with the second liquid 108.

By applying a voltage between electrodes 110 and 112, it is possible to change the curvature of the refractive interface between the first liquid 106 and the second liquid 108, due to the electrowetting effect, for example, from an initial concave shape as shown by line A, to a convex shape as shown by line B. Thus, rays of light passing through the cell perpendicular to the plates 100 and 102 in the region of the drop 106 will be focused to a greater or lesser extent depending on the voltage applied.

For some very high quality applications of the variable focus liquid lens, for example, when a variable focus liquid lens is used in a microscope, it is necessary that the meniscus that provides the refractive interface between the liquids forms as close to a perfect curve as possible. One disadvantage with the lens arrangement shown in Figure 1 for such high quality applications is that the edge of the refractive interface of the lens is moved during operation of the lens, and this can cause some deformation in the curvature of the meniscus. Therefore, the quality of the lens may be degraded below the level required for such very high quality lenses. There is thus a need for a lens in which such lens quality degradation is minimized.

### SUMMARY OF THE INVENTION

It is one object of the present invention to provide an improved electrowetting device and method for manufacturing the same which at least partially addresses the above needs described above with relation to the prior art.

According to a first aspect of the present invention there is provided a variable focus liquid lens, comprising: a structure comprising first and second transparent windows that substantially face each other and a cavity between said transparent windows that contains first and second immiscible liquids, and comprises a first liquid-liquid interface and a second liquid-liquid interface; a disc-shaped intermediate member that is arranged between the first and second windows in the cavity and that comprises a radially inner edge that defines an opening through the intermediate member, wherein said first interface traverses the opening, and wherein the edge of the first interface is fixed to the edge of the opening; and first and second electrodes positioned within the cavity, wherein the second interface is selectively moveable by electrowetting with respect to a surface selected from the surface of the intermediate member and an inner surface of said structure, in response to application of a voltage between said first and second electrodes, whereby the curvature of the first interface is variable in response to movement of the second interface. According to some embodiments of the invention, the first electrode comprises at least a part of the intermediate member.

Further objects, features and advantages of the present invention will become apparent from the following detailed description of exemplary preferred embodiments, when considered together with the accompanying figures of drawing.

### BRIEF DESCRIPTION OF THE DRAWINGS

In the drawings:
Figure 1 (already described above) illustrates a known embodiment of a liquid lens comprising liquids that are movable with respect with each other by electrowetting;
Figure 2A illustrates a liquid lens according to a first embodiment of the present invention;
Figure 2B illustrates an underside view of the lens of Figure 2A;
Figure 3A illustrates a liquid lens according to a second embodiment of the present invention;
Figure 3B illustrates an underside view of the lens of Figure 3A;
Figure 4 is a schematic view showing part of a first optical device having a variable focus lens according to one embodiment of the invention; and
Figure 5 is a schematic view showing a second optical device having a variable focus lens according to one embodiment of the invention.

For clarity, throughout the figures, like reference numbers have been used for corresponding features. The figures are not drawn to scale.

### DETAILED DESCRIPTION OF PREFERRED ENIBODIMENTS

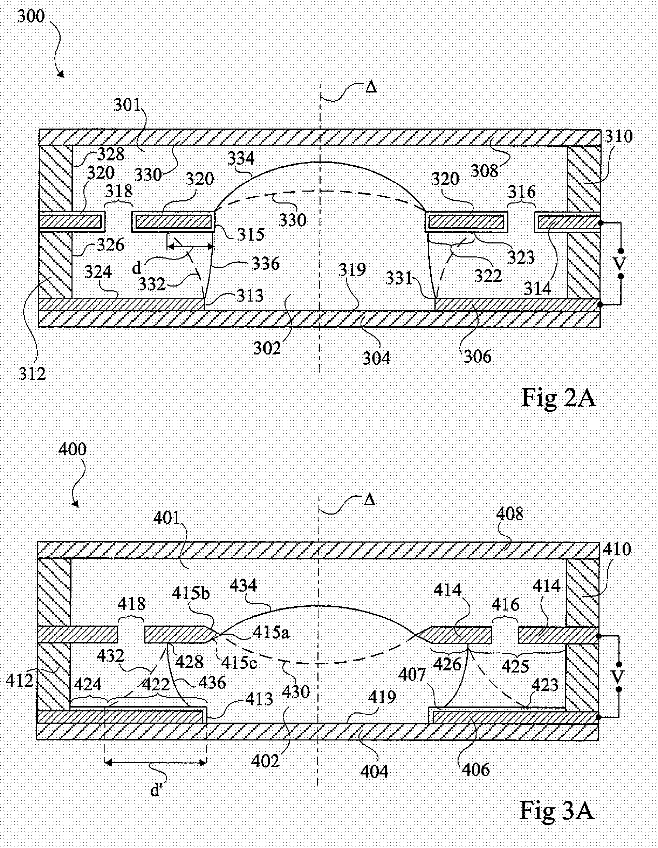

With reference to Figure 2A, a liquid lens 300 according to a first embodiment is shown which has a structure containing a first volume of a first liquid 301, and a second volume of a second liquid 302. The first and second liquids are immiscible, and preferably have the same density. The first liquid 301 is a conducting liquid, and preferably comprises water containing an electrolyte, such as a salt. The second liquid 302 is an insulating liquid, and preferably comprises an oil or an oily substance. The first and second liquids are enclosed in a fluid chamber that, in this embodiment, comprises a first plate comprising a first transparent window 304, a second plate comprising a second transparent window 308, and cylindrical side portions 310, 312, separating said first and second windows. The lens further comprises first and second electrodes 306, 314.

In this example electrode 306 is annular and preferably positioned parallel to and in contact with the inner surface of the first transparent window 304.

Electrode 306 comprises an inner edge 313 that is preferably rotationally symmetrical to and substantially parallel to the optical axis Δ of the lens and that defines the perimeter of an opening in the center of electrode 306. The opening exposes a region 319 of the inner surface of the first window 304.

Electrode 314 is preferably annular and mounted such that it is sandwiched between the first and second cylindrical side portions 310, 312, substantially parallel to the first and second windows 304, 308. Electrode 314 is preferably positioned approximately half-way between the first and second windows 304, 308. Electrode 314 comprises an inner edge 315 which is preferably rotationally symmetrical to and substantially parallel to the optical axis Δ and defines the perimeter of a circular opening in the center of electrode 314. As will be explained in more detail below, the corner between inner edge 315 and the upper surface of electrode 314 in this embodiment provides a means for "fixing" the outer boundary of a first refractive interface between the first and second liquids 301, 302, thereby centering about the optical Δ axis the refractive interface that is formed between the first and second liquids. Use of the term "fixing" or "fixed" in this context throughout the application means that the location of the interface is determined and to some extent held in position by one or more physical or chemical phenomena, such as shape, surface treatment or any other phenomenon.

Electrodes 306, 314 are preferably made of a metal and are thus opaque. The openings in electrodes 306, 314 defined by edges 313 and 315 respectively thus allow light to pass through the lens along the optical axis of the lens, and provide an optical path through the lens having a maximum outer boundary determined by these openings.

Electrode 314 further comprises a series of passageways, e.g., holes, allowing movement of liquids between the lower portion of the lens below electrode 314 and the upper portion above electrode 314. Two such holes are shown in Figure 2A, labelled 316 and 318. Electrode 314 is coated with an insulating layer 320 which insulates it from the first liquid 301.

The inner surfaces of the lens that contact with the first and second liquids 301, 302 are preferably wettable to a greater or lesser degree by the first or second liquids, relative to one another, as will now be described in more detail. For example, surfaces contacting the first liquid 301 are preferably made of glass, providing a hydrophilic surface that is more wettable by aqueous solutions than by oily liquids. Surfaces in contact with the second liquid 302 are, in one preferred embodiment, coated with PTFE, for example, the material commonly known by the brand name Teflon, thus providing a hydrophobic surface that is more wettable by oily liquids than by aqueous solutions.

In particular, an annular region 322 of the underside of electrode 314 between the inner edge 315 and an intermediate perimeter 323 is preferably hydrophobic. Furthermore, the inner edge 315 of electrode 314, the inner edge 313 of electrode 306 and the exposed region 319 on window 304 are preferably hydrophobic.

The other exposed surfaces of the lens in contact with the first liquid 301 are preferably hydrophilic. This applies to the upper surface 324 of the electrode 306, the inner surfaces 326 and 328 of the cylindrical side portions 310 and 312, and the surface of the insulation layer 320 over electrode 314, except region 322 and edge 315.

In operation, a voltage that is preferably an oscillating (AC) voltage is applied between electrodes 314 and 306. For example, such an AC voltage typically varies in the range of 0 V to around 60 V, peak to peak. The wettability of the surfaces of electrode 314 by the first liquid 301 is altered as a function of the voltage level.

Due to the careful control of the quantity of the liquids 301, 302 in the liquid lens and the arrangement and treatment of the inner surfaces of the lens, as described, the second liquid 302 forms a drop that in this embodiment always covers the exposed region 319 of the first window, contacts with the edge 313 of electrode 306, and contacts with the inner edge 315 of the electrode 314 as well as with at least part of region 322, during normal operation of the lens. Thus, first and second interfaces are formed between the two liquids 301, 302. The first refractive interface bridges the opening in the center of electrode 314, and the second interface comprises a moveable peripheral interface in the region between the electrodes 306, 314, which is moveable by electrowetting and thus causes the first refractive interface to move.

In a rest state, for example when a voltage of 0 Volts is applied between the electrodes, the second liquid 302 contacts the whole of region 322 of electrode 314, as this region is hydrophobic, discouraging contact with the first liquid 301. In this state the first and second interfaces between the first and second liquids 301, 302 are as shown by the dashed lines 330 and 332 respectively. Dashed line 330 indicates the first refractive interface bridging the corner between the inner edge 315 and the top surface 320 of electrode 314. Dashed line 332 indicates the second peripheral interface extending between the corner 331 of electrode 306 (between surface 324 and edge 313) and the underside of electrode 314, at a distance d spaced radially outwardly from edge 315.

When the maximum voltage is applied between the electrodes 306, 314, the wettability of the surface 322 of electrode 314 by the first liquid 301 will be increased, causing the interfaces between the first and second liquids to move to a position shown by solid lines 334 and 336. The hydrophobic region 322 is now in contact with the first liquid 301. Solid line 336 indicates the second peripheral interface, which has now shifted such that it is between corner 331 and the underside of electrode 314 very close to edge 315. As shown in Figure 2A, this movement of the second peripheral interface causes the first refractive interface to deform or "stretch," to the position indicated by solid line 334. In particular, while in the rest state, the second liquid 302 extends only slightly through the opening in electrode 314, such that the first refractive interface 330 has a relatively slight curvature; however, when the voltage is increased, more of the second liquid 302 is forced through the opening, without the edges of the first refractive interface moving. Thus, the curvature of the first refractive interface increases. Due to the different refractive indexes of the first and second liquids, light passing through the lens parallel to the optical axis Δ will be diffracted to a greater or lesser extent depending on the curvature of the first refractive interface, and thus variable focuses can be achieved. By varying the applied voltage, the second peripheral interface can be controlled to selectively contact the underside of electrode 314 at any desired contour between perimeter 323 and edge 315, and thus the curvature of the first refractive interface can be selectively controlled to be anywhere between the two extremes shown by dashed line 330 and solid line 334.

In alternative embodiments, the curvature of the first refractive interface in the lens of Figure 2A can be inverted by application of the voltage. For example, in the rest state the first refractive interface can form a curve that dips downward towards window 304, and then be moved by application/increase of the voltage to form a curve as indicated by solid line 334.

The holes 316, 318, and other holes and/or passageways not shown in Figure 2A, allow the first liquid 301 to flow between the regions above and below electrode 314 in response to movement of the first and second peripheral interfaces.

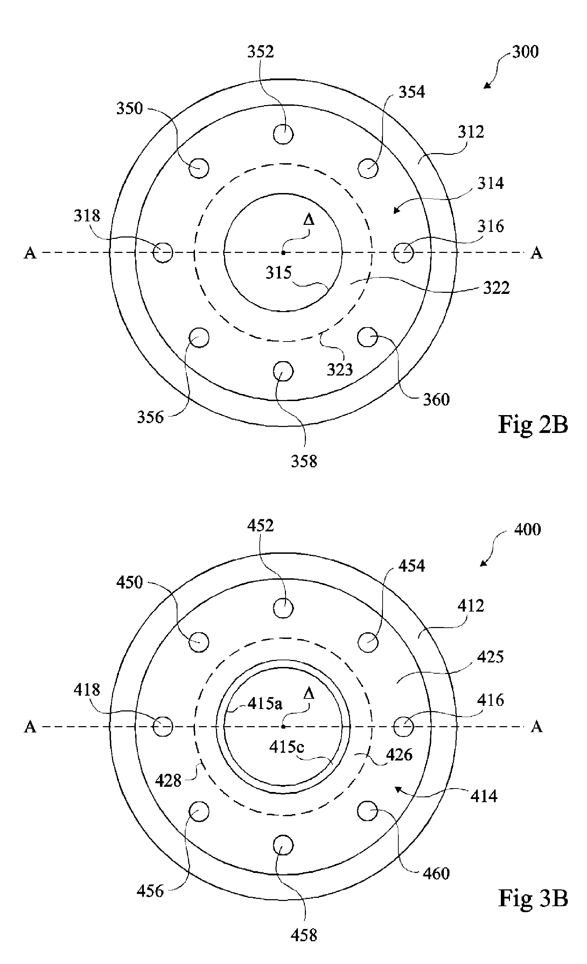

With reference to Figure 2B, a view of the underside of the lens of Figure 2A is illustrated, with the transparent window 304 and electrode 306 removed. As shown in Figure 2B, the lens comprises the cylindrical side portion 312, and electrode 314. The dashed line A illustrates the cross-section used for the cross-section view of Figure 2A. Electrode 314 comprises holes 316 and 318 as shown in Figure 2A. Further holes 350, 352, 354, 356, 358 and 360 are preferably provided at regular intervals around the electrode 314. Figure 2B also shows edge 315, and annular region 322 which is centered around the optical axis Δ, extending between edge 315 and perimeter 323.

Figure 3A illustrates an alternative embodiment of a liquid lens 400. Again, the liquid lens comprises a structure containing a volume of a first liquid 401 and a volume of a second liquid 402. In this embodiment, these liquids are the same as the first and second liquids 301 and 302 described above and will therefore not be described again in detail.

The first and second liquids 401, 402 are enclosed in a fluid chamber comprising a first plate comprising a second transparent planar window 404, a first electrode 406, which is preferably annular and positioned parallel to and in contact with the inner surface of the first window 404, a second plate comprising a second transparent planar window 408, and cylindrical side portions 410 and 412, separating electrode 406 and the second window 408.

Electrode 406 comprises an inner edge 413, which is preferably rotationally symmetrical to and substantially parallel to the optical axis Δ of the lens. The inner edge 413 defines the perimeter of an opening in the center of electrode 406. In this second embodiment, electrode 406 is covered with an insulating material 407 to prevent direct contact with the first liquid 401.

A second electrode 414, which is also preferably annular, is mounted such that it is sandwiched between first and second cylindrical side portions 410 and 412 and is arranged to be substantially parallel to electrode 406 and the first and second transparent windows 404, 408. In this second embodiment, electrode 414 is not covered by an insulating layer but makes direct contact with the first liquid 401. Electrode 414 comprises an inner edge 415a which is preferably substantially circular and is centered on the optical axis Δ of the lens. In this embodiment, inner edge 415a is pointed. In particular, electrode 414 comprises faces 415b and 415c which are rotationally symmetrical with respect to the optical axis Δ of the lens, and are inclined such that their cross-section forms a knife-edge pointing toward the optical axis, with faces 415b and 415c meeting at pointed inner edge 415a. The incline of each of faces 415b and 415c is sufficient to ensure that the edge of the first refractive interface which contacts inner edge 415a is not displaced during normal operation of the lens. In general, an angle between the faces 415b and 415c of less than 45 degree is preferable. However, an angle between 45 degrees and 90 degrees is sufficient if faces 415b and 415c have different surface wettabilities, such that they are relatively more wettable by the first and second liquids 401, 402, respectively.

Electrodes 406, 414 are preferably made of a metal and are thus opaque. The openings in electrodes 406, 414 defined by edges 413 and 415a, respectively, thus allow light to pass through the lens, and provide an optical path through the lens having a maximum outer boundary determined by these openings.

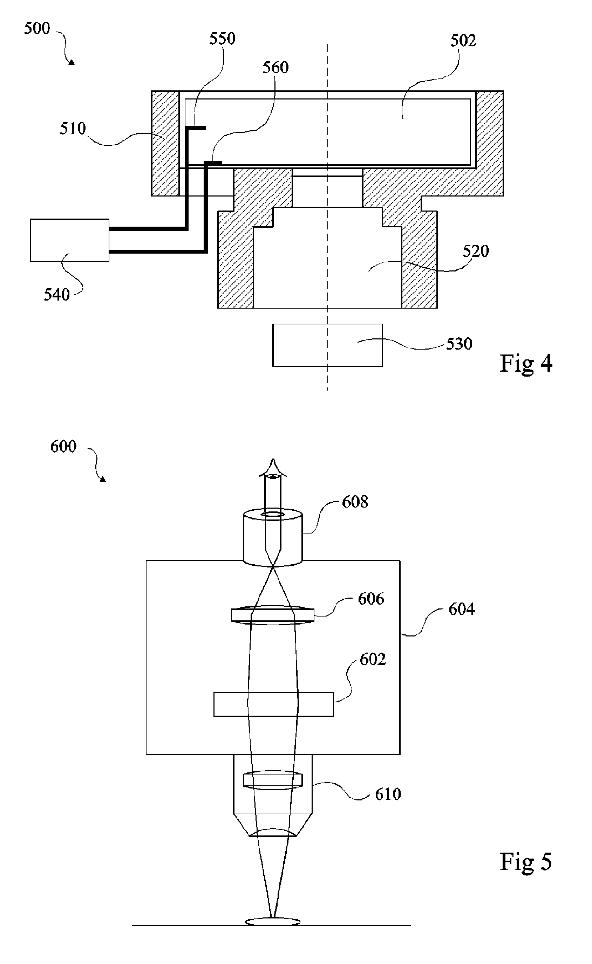

Electrode 414 further comprises a number of passageways, e.g., holes, two of which are shown in Figure 4 and are labelled 416 and 418, allowing the movement of first liquid 401 between the upper and lower portions of the lens that are separated by electrode 414.

As with the first embodiment of Figure 2A, the inner surfaces of the lens that contact with the first and second liquids 401, 402 are preferably wettable by the first or second liquids, to a greater or lesser degree with respect to one another, as will now be described in more detail. This can be achieved by choosing a material having the required wettability, or treating the surface, for example, as described above. In particular, an annular region 422 of the surface of the insulating layer 407 that covers electrode 406 is preferably hydrophobic. The annular region 422 extends radially outwardly of edge 413 for a distance d' between inner edge 413 and a perimeter 423. An outer annular region 424 of the surface of the insulation layer 407 between perimeter 423 and the cylindrical side portion 412 is preferably hydrophilic. An annular region 425 of the underside of electrode 414 is also preferably hydrophilic, as is the top surface of electrode 414 and face 415b. The face 415c and an inner region 426 of the under side of electrode 414, between the edge 414a and perimeter 428, are preferably hydrophobic.

Due to the careful control of the quantity of the liquids 401, 402 in the liquid lens 400 and the arrangement and treatment of the inner surfaces of the lens, as described, the second liquid 402 forms a drop that always covers the exposed region 419 of the first window 404, contacts with the edge 413 of electrode 406, contacts with face 415c as well as region 426 of electrode 414 and contacts with at least part of region 422, during normal operation of the lens. Thus, first and second interfaces between the two liquids 401, 402 are formed. The first refractive interface bridges the opening in the center of electrode 414, and the second moveable peripheral interface that is moveable in the region between electrodes 406, 414 by electrowetting and thus causes the first refractive interface to move.

Perimeter 428, which is preferably circular and centered around the optical axis Δ, is thus the border between hydrophilic region 425 and hydrophobic region 426, and thus provides a perimeter to which the edge of the second peripheral interfaces is fixed.

Operation of this second lens embodiment is similar to the operation of the first embodiment described above. As with the first embodiment, a voltage V, which is preferably an oscillating (AC) voltage, is applied between electrodes 406, 414. In a rest state, for example, when a voltage of 0 Volts is applied between the electrodes 406, 414, the second liquid 402 will contact the region 422 of electrode 406. Because this region is hydrophobic, contact with the first liquid 401 is discouraged. The first and second interfaces between the first and second liquids 401, 402, are therefore as shown by the dashed lines 430, 432, respectively. Dashed line 430 indicates the first refractive interface bridging the opening defined by the inner edge 415a of electrode 414. Dashed line 432 indicates the second peripheral interface extending between the surface of electrode 406 (at a point located a distance d' from the inner edge 413) and perimeter 428 on the underside of electrode 414.

When a maximum voltage is applied between electrodes 406, 414, the wettability of the region 422 of electrode 406 by the first liquid 401 is increased, causing the first and second interfaces between the first and second liquids 401, 402 to move to positions shown by solid lines 434 and 436, respectively. The hydrophobic region 422 is now in contact with the first liquid 401. Solid line 436 indicates the second peripheral interface, which has now shifted such that it is between a point close to edge 413 on the surface of electrode 406 and the perimeter 428 on the underside of electrode 414. This movement of the second peripheral interface causes the first refractive interface, indicated by solid line 434, to move. According to this second embodiment, when it is in the rest state, the first refractive interface forms a curve that dips downwards towards the first window 404, as shown by dashed line 430. However, when the maximum voltage is applied, the curvature of the first refractive interface is inverted, such that the first refractive interface curves upwardly toward the second window 408. The lens can therefore be transformed from having the properties of a convex lens to the properties of a concave lens. By varying the applied voltage, the second peripheral interface can be selectively controlled to contact the surface of electrode 406 at any desired contour between perimeter 423 and edge 413, and thus the curvature of the first refractive interface can be selectively controlled to be anywhere between the two extremes shown by dashed line 430 and solid line 434.

Figure 3B illustrates a view of the underside of lens 400, with the transparent window 404 and electrode 406 removed. As shown, electrode 414 is provided having a series of passageways or holes, including holes 418 and 416, which are shown in Figure 3A. Further holes 450, 452, 454, 456, 458 and 460 are also preferably provided, at regular intervals around electrode 414. The face 415c and inner region 426 having an outer perimeter 428 are shown on the underside of electrode 414. These regions are preferably hydrophobic. The rest of the underside of electrode 414, indicated as region 425, is hydrophilic. In this way, the interface between the two liquids is fixed to perimeter 428.

Figure 4 schematically illustrates one example of a high quality optical device 500 incorporating a lens 502 of variable focal length according to embodiments of the present invention, for example, one of the first and second embodiments of Figures 2A, 2B and 3A, 3B, respectively. The optical device 500 is, for example, a high quality digital camera. The optical device comprises a mount 510 that holds the variable focus lens 502 and a group 520 of fixed lenses. The device further comprises a control block 540 for controlling the lens 500, the control block 540 being connected to the electrodes of the lens 502 through the connections 550, 560. An optical sensor array 530 is provided for capturing images received via the lenses 502 and 520.

Figure 5 illustrates a high quality optical device 600, in this example, a microscope, incorporating a lens 602 of variable focal length according to embodiments of the invention, for example, one of the first or second embodiments of Figures 2A, 2B and 3A, 3B respectively. The variable focus lens 602 is preferably included in a lens module 604 of the device that preferably further comprises one or more fixed lenses or lens groups 606. The microscope preferably comprises an ocular 608 providing the eye piece of the microscope, and an objective 610 that first receives the image of the object being viewed by the microscope. The lens module 604 is positioned so as to be aligned with the optical axis of the device, between the ocular 608 and the objective 610.

Thus, a liquid lens has been described in which a first moveable interface, traversing an optical path through the lens and arranged between two liquids of different refractive indexes, provides a variable lens. The edges of this interface are fixed to the inner edge of an annular disc, and therefore there is no movement between the edge of the first interface and the annular disc. The inner edge of the annular disc is preferably circular and centers the refractive interface on the optical axis Δ. A second peripheral interface is moved to vary the focusing of the lens, the second interface being outside the optical path through the lens.

Furthermore, this design of the liquid lens having an annular disc-shaped support for the first liquid interface allows a very thin lens to be produced, as space along the optical axis of the lens is optimized. This is advantageous in many applications, such as mobile telephones, since keeping the lens as small as possible is a key requirement, particularly the thickness of the lens along the optical axis.

Advantageously the variable liquid lens comprises electrode 314, 414, which is annular and disc-shaped, forming an intermediate disc-shaped support member for the first liquid interface, making the device easy to manufacture and assemble. In particular, it advantageously comprises no complicated parts.

Due to the arrangement of the lens and the interfaces, electrode 306, 406 can include an opening, such that no electrode is required across the optical path of the lens. This arrangement is preferable since it results in reduced degradation of the light passing through the lens when compared to using a transparent electrode. In alternative embodiments, a transparent electrode can be provided across the optical path of the lens, without substantially detracting from the other advantages of the invention.

The dimensions of the lens will depend on the specific requirements of the lens, but as an example, the lens could have a diameter in the range of 5 to 50 mm and a spacing between the first and second transparent windows of between 2 and 3 mm. In particular, the spacing between each transparent window and electrode 314, 414 in each embodiment can be, for example, approximately 0.5 to 1.5 mm. Electrode 306, 406 can be, for example, approximately 0.2 mm thick.

In embodiments of the present invention the stability of the liquids in the lens is improved by providing a relatively large contact surface between the second liquid 302, 402, and electrode 314, 414. In the embodiment of Figure 2A, this contact area is greatest when the lens is in the rest position as shown by dashed lines 330. In the embodiment of Figure 3A, this contact area is region 426, which is of a fixed size, and in alternative embodiments could be increased further by moving the perimeter 428 (which contacts the second peripheral interface) radially outwards towards the side portion 412.

Advantageously, an inversion of the refractive interface between the liquids can be achieved in certain embodiments of the invention. Inversion of the interface implies a large change in the contact angle between the refractive interface and the inner edge of electrode 314, 414. The risk of displacement of the refractive interface from its fixed position at the inner edge of electrode 314, 414 is advantageously minimized, as shown in Figure 3A, by providing a pointed inner edge 415a. The pointed inner edge 415a also serves to minimize distortions in the lens curvature.

By providing a support and centering member for the refractive interface that also functions as an electrode, no separate electrode need be provided. Furthermore, due to the arrangement of the electrodes, the external edge of the second annular electrode 314, 414 is accessible to the outside of the lens, such that electrical connection thereto is easily achieved.

While a number of specific examples of lens embodiments have been described herein, there are numerous variations and alternative forms that can be constructed. For example, specific embodiments of structures of the lenses have been described, however alternative structures are possible without departing from the scope of the invention. For example, while the outer casing of the lens, and in particular cylindrical side portions 310, 312 and 410, 412 have been described as being annular, alternative embodiments of the shapes are possible. While electrode 314, 414 has been described as comprising a circular opening defined by edges 315, 415a, in alternative embodiments this opening could be of a different shape to provide alternative lens types. Furthermore, while a number of holes 316, 318, 416, 418 have been described, alternative embodiments of these passageways can be provided in different arrangements, and of different shapes, as long as the function of providing communication for the liquid is accomplished.

Furthermore, while annular electrodes have been provided in both the first and second embodiments, in alternative embodiments the electrode which is designed to contact the first liquid could be of a different shape, such as a pin entering the lens and making contact with the first liquid. In the case in which electrode 414 is arranged to contact the first liquid, as in the embodiment of Figure 3A, electrode 414 can therefore be replaced by an annular support which is, for example, the same shape as electrode 414, but need not be of a conducting material.

The liquid lenses of Figures 2A and 3A comprise first and second transparent windows 304, 404, 308, 408, which in the embodiments described are planar windows. In alternative embodiments, these windows could be of a non-planar shape, such as convex, concave, planar-concave or planar convex lenses. The transparent windows are preferably formed of glass. In alternative embodiments, these windows could be mounted in a housing, for example, of metal, fixed to respective cylindrical side portions 310, 410, 312, 412 or forming part of the cylindrical side portions.

While the interface in the embodiments described is fixed in some embodiments by the shape of the inner edge of the chamber, for example, a corner edge, or by a difference in surface characteristics, e.g., hydrophobic or hydrophilic, either of these phenomena alone can be used to fix the interface.

While a preferred embodiment of electrode 306, 406 in each embodiment has been described as being opaque and annular in shape and having a central opening allowing light to pass through the window covered by electrode 306, 406, in alternative embodiments electrode 306, 406 could be transparent and extend across the entire window, without need of the opening.

Having thus described at least one illustrative embodiment of the invention, various alterations, modifications and improvements will readily occur to those skilled in the art. Such alterations, modifications and improvements are intended to be within the spirit and scope of the invention. Accordingly, the foregoing description is by way of example only and is not intended to be limiting. The invention is limited only as defined in the following claims and the equivalent thereto.

## Claims

1. A variable focus liquid lens (300, 400) comprising:
a structure comprising first and second transparent windows (304, 404, 308, 408) that face each other and a cavity between said transparent windows that contains first and second immiscible liquids (301, 302, 401, 402), and comprises a first liquid-liquid interface (330, 334, 430, 434) and second liquid-liquid interface (332, 336, 432, 436); a disc-shaped intermediate member (314, 414) that is arranged between the first and second windows in the cavity and that comprises a radially inner edge (315, 415a) that defines an opening through the intermediate member, wherein said first interface (330, 334, 430, 434) traverses the opening, and wherein the edge of the first interface is fixed to the edge of the opening; and
first and second electrodes (306, 314) positioned within the cavity, wherein the second interface (332, 336, 432, 436) is selectively moveable by electrowetting with respect to a surface selected from the surface of the intermediate member and an inner surface of said structure, in response to application of a voltage between said first and second electrodes, whereby the curvature of the first interface is variable in response to movement of the second interface.

2. The variable focus liquid lens of claim 1, wherein the inner edge of the intermediate member intermediate member is circular and is centered on the optical axis.

3. The variable focus liquid lens of claim 1, wherein the first electrode comprises at least a part of the intermediate member.

4. The variable focus liquid lens of claim 3, wherein said intermediate member comprises an insulating surface layer preventing electrical contact with said first liquid, and wherein said second interface is moveable by electrowetting with respect to said insulated surface of said intermediate member.

5. The variable focus liquid lens of claim 4, wherein said second interface is fixed to said inner surface of said structure by at least one phenomenon selected from the group consisting of:
a sharp variation in the shape of said inner surface; and
a difference in the wettability between areas of said inner surface.

6. The variable focus liquid lens of claim 3, wherein said second electrode comprises an annular disc (406) positioned adjacent to said first window.

7. The variable focus liquid lens of claim 6, wherein said second electrode comprises an insulating surface layer (407) preventing contact with said first liquid (301, 401), and wherein said second interface is moveable by electrowetting with respect to the surface of said second electrode.

8. The variable focus liquid lens of claim 7, wherein said second interface is fixed to said surface of the intermediate member by at least one phenomenon selected from the group consisting of:
a sharp variation in the shape of the surface of said intermediate member; and
a difference in the wettability between areas of said surface of said intermediate member.

9. The variable focus liquid lens of claim 1, wherein the edge of the opening comprises a knife-shaped edge pointed toward the center of the opening.

10. The variable focus liquid lens of claim 1, wherein said intermediate member comprises at least one passageway (316, 416) allowing one of said first and second liquids (301, 302, 401, 402) to pass through said intermediate member.

11. An image capturing optical device comprising:
an image sensor (530);
a control block(540); and
a lens arrangement comprising at least one fixed lens (520) and a variable focus liquid lens according to any preceding claim.

12. A microscope comprising:
an ocular (608);
an objective (610); and
a lens arrangement comprising at least one fixed lens (606) and a variable focus liquid lens according to any of claims 1 to 10.
